# EUROPEAN PATENT APPLICATION

(11) **EP 2 128 662 A1**
(43) Date of publication of application: **02.12.2009**
(21) Application number: 08020474.6
(22) Date of filing: 25.11.2008
(51) Int. Cl.: G02B 5/02, G02B 5/30, G02F 1/13357

(54) **Optical sheet, backlight unit, and liquid crystal display**

(30) Priority: 28.05.2008 KR 20080049662; 18.08.2008 KR 20080080266
(71) Applicant: LG Electronics Inc., Seoul 150-010 (KR)
(72) Inventor: Lee, Junghoon, Cheongju-si Chungcheongbuk-do, 361-480 (KR); Kim, Kyongrae, Cheongju-si Chungcheongbuk-do, 361-480 (KR)
(74) Representative: Katérle, Axel

(57) **Abstract**

An optical sheet, a backlight unit including the optical sheet, and a liquid crystal display including the backlight unit may be provided. The optical sheet includes a reflective polarizing film (110), a first adhesive layer (130) on one surface of the reflective polarizing film, and a first diffusion layer (120) on the first adhesive layer. The first diffusion layer includes a first light transmitting material (121) and a plurality of first diffusion particles (122) provided therein. A difference between a refractive index of the first adhesive layer and a refractive index of the first light transmitting material is less than or equal to approximately 0.2.

## Description

### BACKGROUND

### 1. Field

Embodiments of the present invention may relate to an optical sheet, a backlight unit including the optical sheet, and/or a liquid crystal display including the backlight unit.

### 2. Background

A display field may visually display information of various electrical signals. In the display field, various types of flat panel displays having excellent characteristics such as thin profile, lightness in weight, and low power consumption have been introduced. Additionally, flat panel displays are replacing cathode ray tubes (CRT).

Examples of flat panel displays include a liquid crystal display (LCD), a plasma display panel (PDP), a field emission display (FED), and an electroluminescence display (ELD). The liquid crystal display may be used as a display panel of notebooks, monitors of personal computers, and/or TV monitors because of a high contrast ratio and excellent display characteristics of a moving picture.

The liquid crystal display may be considered a light receiving display. The liquid crystal display may include a liquid crystal display panel that displays an image and a backlight unit that is positioned under the liquid crystal display panel to provide the liquid crystal display panel with light.

The backlight unit may include a light source and an optical sheet. The optical sheet may include a diffusion sheet, a prism sheet, or a protective sheet.

If uniformity of luminance of light that the backlight unit provides to the liquid crystal display panel is reduced, then display quality of the liquid crystal display may be reduced. A diffusion sheet may allow light to be uniformly diffused over an entire surface of a display area of the liquid crystal display panel so as to prevent a reduction in luminance uniformity of the light. However, it may be difficult to secure a high light diffusivity as well as the luminance uniformity using only the diffusion sheet.

### BRIEF DESCRIPTION OF THE DRAWINGS

Arrangements and embodiments may be described in detail with reference to the following drawings in which like reference numerals refer to like elements and wherein:

FIG. 1 is a cross-sectional view of an optical sheet according to an example embodiment of the present invention;

FIG. 2 is a cross-sectional view of an optical sheet according to an example embodiment of the present invention;

FIGs. 3A and 3B show a backlight unit according to an example embodiment of the invention;

FIG. 3C shows a backlight unit according to an example embodiment of the present invention;

FIGs. 4A and 4B show a backlight unit according to an example embodiment of the present invention;

FIG. 4C shows a backlight unit according to an example embodiment of the present invention;

FIGs. 5A and 5B show a liquid crystal display according to an example embodiment of the present invention; and

FIG. 5C shows a liquid crystal display according to an example embodiment of the present invention.

### DETAILED DESCRIPTION

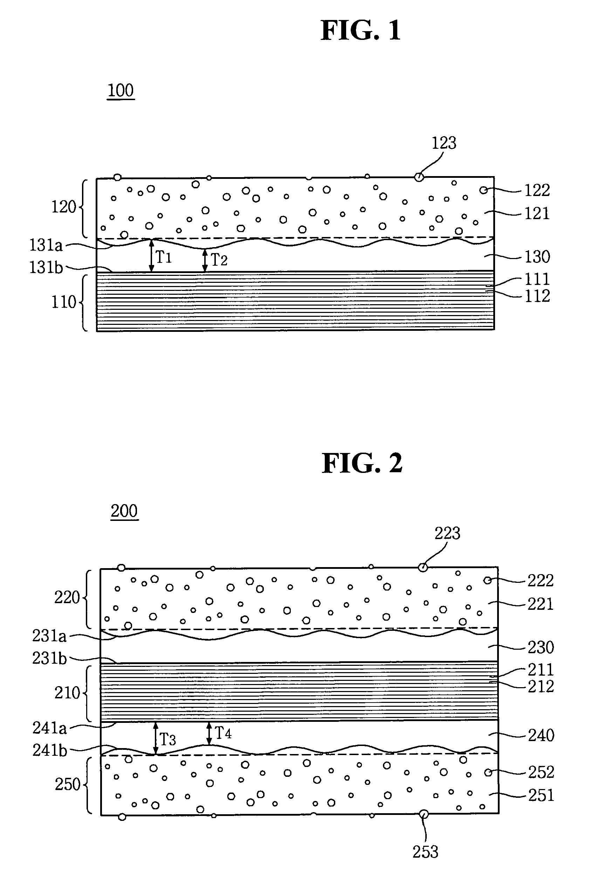

FIG. 1 is a cross-sectional view of an optical sheet according to an example embodiment of the present invention. Other embodiments and configurations are also within the scope of the present invention.

More specifically, FIG. 1 shows an optical sheet 100 that includes a reflective polarizing film 110 and a first diffusion layer 120 (or diffusion unit) on the reflective polarizing film 110. The first diffusion layer 120 may include a first light transmitting material 121 and a plurality of first diffusion particles 122. The first diffusion particles 122 may be embedded into the first light transmitting material 121.

The reflective polarizing film 110 can transmit or reflect light coming from a light source. The reflective polarizing film 110 may include a first layer 111 formed of a polymer and a second layer 112 positioned adjacent to the first layer 111. The second layer 112 may be formed of a polymer having a refractive index different from a refractive index of the polymer forming the first layer 111.

The reflective polarizing film 110 may have a structure in which the first layers 111 and the second layers 112 are alternately stacked in a repeated manner. The first layers 111 may be formed of polymethylmethacrylate (PMMA), and the second layers 112 may be formed of polyester.

A portion of the light coming from the light source may be transmitted by the reflective polarizing film 110, and another portion of the light coming from the light source may be reflected toward the light source underlying the reflective polarizing film 110. The light reflected toward the light source may be again reflected and may be incident on the reflective polarizing film 110. A portion of the light incident on the reflective polarizing film 110 may be transmitted by the reflective polarizing film 110, and another portion of the light incident on the reflective polarizing film 110 may be again reflected toward the light source underlying the reflective polarizing film 110.

In other words, because the reflective polarizing film 110 has a structure in which the first layers 111 and the second layers 112 are alternately stacked in a repeated manner, the reflective polarizing film 110 can improve efficiency of the light coming from the light source using a principle in which molecules of the polymer are oriented in one direction to transmit a polarization of a direction different from the orientation direction of the molecules and to reflect a polarization of the same direction as the orientation direction of the molecules.

The reflective polarizing film 110 may have a thickness of approximately 100 µm to 300 µm depending on size of a display device. When the thickness of the reflective polarizing film 110 is equal to or greater than 100 µm efficiency of the light can be improved using a principle(s) of polarization and reflection. When the thickness of the reflective polarizing film 110 is equal to or less than 300 µm, a thin profile optical sheet can be achieved.

The first diffusion layer 120 may be diffuse the light coming from the external light source using the first diffusion particles 122 (and/or a plurality of bubbles) in the first diffusion layer 120.

The first light transmitting material 121 forming the first diffusion layer 120 may include unsaturated polyester, methyl methacrylate, ethyl methacrylate, isobutyl methacrylate, normal butyl methacrylate, normal butyl methyl methacrylate, acrylic acid, methacrylic acid, hydroxyethyl methacrylate, hydroxypropyl methacrylate, hydroxyethyl acrylate, acrylamide, methylol acrylamide, glycidyl methacrylate, ethyl acrylate, isobutyl acrylate, normal butyl acrylate, acrylic-based material such as 2-ethylhexyl acrylate polymer, 2-ethylhexyl acrylate copolymer or 2-ethylhexyl acrylate terpolymer, urethane-based material, epoxy-based material, melamine-based material, polycarbonate, and polystyrene, for example. Other materials may also be used.

The first diffusion particles 122 in the first diffusion layer 120 may be a bead (such as provided in a cavity). Each of the first diffusion particles 122 may be formed of a material selected from the group consisting of polymethylmethacrylate (PMMA), polystyrene, silicon, and a combination thereof.

Some of the beads may be exposed outside of the first diffusion layer 120.

The first diffusion layer 120 may further include or may alternatively include a plurality of bubbles to diffuse the light coming from the external light source. The bubbles may be provided instead of the first diffusion particles 122 or may be provided with the first diffusion particles 122.

The first diffusion layer 120 may include 10 to 50 parts by weight of the first diffusion particles 122 based on the first light transmitting material 121. When the amount of the first diffusion particles 122 based on the first light transmitting material 121 is equal to or greater than 10 parts by weight, a difficulty diffusing the light from the light source using the beads (or the bubbles) may be prevented (or reduced). When the amount of the first diffusion particles 122 based on the first light transmitting material 121 is equal to or less than 50 parts by weight, a reduction in transmittance of the light from the light source can be prevented.

Diameters of the various first diffusion particles 122 distributed in the first light transmitting material 121 may be different from one another (or non-uniform).

The first diffusion particles 122 may have a circle shape, an oval shape, a snowman shape, and/or an even circle shape. Other shapes may also be used.

The first diffusion particles 122 may be non-uniformly distributed throughout the first light transmitting material 121.

The diameters of the first diffusion particles 122 may be approximately 0.5 µm to 10 µm. When the diameters of the first diffusion particles 122 are small, a light diffusivity of the optical sheet 100 can be improved by increasing a density of the first diffusion particles 122 in the first diffusion layer 120. However, when the diameters of the first diffusion particles 122 are very small, interference of the light from the external light source may occur. Therefore, when diameters of the first diffusion particles 122 are equal to or greater than 0.5 µm, the light diffusivity of the optical sheet 100 can be improved to the extent that interference of the light may not occur (or may minimally occur).

When diameters of the first diffusion particles 122 are large, the first diffusion layer 120 may be thickly formed to secure light diffusivity of the optical sheet 100, and thus it may be difficult to manufacture the thin profile optical sheet 100. Therefore, when diameters of the first diffusion particles 122 are equal to or less than 10 µm, the thin profile of the optical sheet 100 can be achieved to the extent that the light diffusivity of the optical sheet 100 is not reduced (or is not substantially reduced).

A backlight unit including the optical sheet may operate as will be described below. Light produced by a light source may be incident on the optical sheet. A portion of the light incident on the optical sheet may collide with the first diffusion particles of the first diffusion unit, and a traveling path of the light may change. Another portion of the light incident on the optical sheet may pass through an emitting surface of the first diffusion layer toward a liquid crystal display panel.

The light colliding with the first diffusion particles may collide with other first diffusion particles adjacent to the colliding first diffusion particles, and a traveling path of the light changes again. A portion of the light, of which the traveling path changes twice, may pass through the emitting surface of the first diffusion layer toward the liquid crystal display panel. Another portion of the light, of which the traveling path changes twice, may collide with the first diffusion particles, and a traveling path of the light may change.

The light passing through the emitting surface of the first diffusion layer may be uniformly incident on the liquid crystal display panel.

The optical sheet 100 may further include a first adhesive layer 130 between the reflective polarizing film 110 and the first diffusion layer 120.

The first diffusion layer 120 may be formed on the reflective polarizing film 110 by combining the first light transmitting material 121 with the first diffusion particles 122 (and/or bubbles) and applying or coating the mixture on the reflective polarizing film 110.

The first diffusion layer 120 may be formed on the reflective polarizing film 110 by forming the first light transmitting material 121 and the first diffusion particles 122 (or bubbles) in a film form using an extrusion molding method or an injection molding method and then attaching it on the reflective polarizing film 110 using an adhesive. The first adhesive layer 130 may be coated on the reflective polarizing film 110 to form the first diffusion layer 120.

The first adhesive layer 130 may be formed of a material selected from the group consisting of an acrylic-based adhesive, a rubber-based adhesive, a silicon-based adhesive, and a combination thereof.

Examples of the acrylic-based adhesive include acrylic acid alkyl ester such as ethyl acrylate, butyl acrylate, amyl acrylate, 2-ethylhexyl acrylate, octyl acrylate, cyclohexyl acrylate and benzyl acrylate, and methacrylic acid alkyl ester such as butyl methacrylate, 2-ethylhexyl methacrylate, cyclohexyl methacrylate and benzyl methacrylate.

The rubber-based adhesive may include a block copolymer including natural rubber, isoprene rubber, styrene-butadiene rubber, reclaimed rubber, polyisobuthylene rubber, styrene-isoprene-styrene rubber, and styrene-butadiene-styrene rubber as a principal component.

Examples of the silicon-based adhesive may include dimethylsiloxane-based material and diphenylsiloxane-based material.

A thickness of the first adhesive layer 130 may be approximately 1 µm to 10 µm in consideration of light transmittance and adhesive properties. Other thicknesses may also be used.

The thickness of the first adhesive layer 130 may be an average value of a distance between a peak of a first surface 131a and a second surface 131b and a distance between a valley of the first surface 131a and the second surface 131b. An average thickness of the first adhesive layer 130 may be approximately 1 µm to 10 µm.

A distance T1 between a first position of the first surface 131a and the second surface 131b may be different from a distance T2 between a second position of the first surface 131a and the second surface 131b. The distances T1 and T2 may satisfy the following equation: 10 nm ≤ |T1-T2| ≤ 2 µm. T1 represents a first thickness between the first surface 131a and the second surface 131b and T2 represents a second thickness between the first surface 131a and the second surface 131b.. As seen in Fig.1, vertical distances T1 and T2 are distances along vectors substantially perpendicular to the surface plane of reflective polarizing film 110.

The following Table 1 indicates a diffusion effect and a luminance of the optical sheet 100 depending on a relationship between the distances T1 and T2. In the following Table 1, X, ○, and Ⓞ represent bad, good, and excellent states of the characteristics, respectively.

**[Table 1]**

| **\|T1-T2\| (**µ**m)** | **Diffusion Effect** | **Luminance** |
|---|---|---|
| 0.005 | X | Ⓞ |
| 0.01 | ○ | Ⓞ |
| 0.03 | ○ | Ⓞ |
| 0.05 | ○ | ○ |
| 0.1 | ○ | ○ |
| 0.5 | ○ | ○ |
| 1 | Ⓞ | ○ |
| 2 | Ⓞ | ○ |
| 5 | Ⓞ | X |

As indicated in the above Table 1, when distances T1 and T2 satisfy the following equation: 10 nm ≤ |T1-T2| , light coming from the light source can be diffused because of curved or uneven surfaces on one surface of the first adhesive layer 130. When distances T1 and T2 satisfy the following equation: |T1-T2| ≤ 2 µm, a reduction in luminance resulting from a large height difference of the first adhesive layer 130 may be prevented.

A difference between a refractive index of the first light transmitting material 121 and a refractive index of the first adhesive layer 130 may be less than or equal to approximately 0.2.

The following Table 2 indicates luminance characteristics and light loss prevention efficiency of the optical sheet 100 depending on a difference between a refractive index of the first light transmitting material 121 and a refractive index of the first adhesive layer 130. In the following Table 2, X, ○, and Ⓞ represent bad, good, and excellent states of the characteristics, respectively.

**[Table 2]**

| **Difference Between Refractive Indexes of First Light Transmitting Material and First Adhesive Layer** | **Luminance Characteristics** | **Light Loss Prevention Efficiency** |
|---|---|---|
| 0 | Ⓞ | Ⓞ |
| 0.05 | Ⓞ | Ⓞ |
| 0.1 | ○ | ○ |
| 0.15 | ○ | ○ |
| 0.2 | ○ | ○ |
| 0.25 | X | X |
| 0.3 | X | X |

As indicated in the above Table 2, when the difference between the refractive indexes of the first light transmitting material 121 and the first adhesive layer 130 is equal to or greater than 0, a loss of light from the light source can be prevented and luminance can be improved. When a difference between the refractive indexes of the first light transmitting material 121 and the first adhesive layer 130 is less than or equal to approximately 0.2, light from the light source may be reflected or refracted at an interface between the first adhesive layer 130 and the first diffusion layer 120. Therefore, a reduction in the luminance caused by a light loss at the side may be prevented.

The optical sheet 100 may prevent the loss of the light coming from the light source and improve the luminance by allowing a difference between the refractive indexes of the first light transmitting material 121 and the first adhesive layer 130 to be less than or equal to 0.2.

FIG. 2 is a cross-sectional view of an optical sheet according to an example embodiment of the present invention. Other embodiments and configurations are also within the scope of the present invention.

As shown in FIG. 2, an optical sheet 200 may include a reflective polarizing film 210, a first adhesive layer 230 on the reflective polarizing film 210, and a first diffusion layer 220 on the first adhesive layer 230. The first diffusion layer 220 may include a first light transmitting material 221 and a plurality of first diffusion particles 222 (and/or a plurality of beads or bubbles). The first diffusion particles 222 may be embedded in the first light transmitting material 221. The reflective polarizing film may include a first layer 211 formed of a polymer and a second layer 212 positioned adjacent to the first layer 211.

The thickness of the first adhesive layer 230 may be an average value of a distance between a peak of a first surface 231a and a second surface 231b and a distance between a valley of the first surface 231a and the second surface 231b. An average thickness of the first adhesive layer may be approximately 1 µm to 10 µm.

The optical sheet 200 may further include a second adhesive layer 240 under the reflective polarizing film 210 and a second diffusion layer 250 on the second adhesive layer 240.

The second adhesive layer 240 may include a third surface 241 a and a fourth surface 241b that are opposite to each other. The third surface 241a and/or the fourth surface 241b may be a curved or uneven surface.

A thickness of the second adhesive layer 240 may be approximately 1 µm to 10 µm in consideration of a light transmittance and an adhesive property. Other thicknesses may also be used.

The thickness of the second adhesive layer 240 may be an average value of a distance between a peak of the fourth surface 241b and the third surface 241 a and a distance between a valley of the fourth surface 241b and the third surface 241a. An average thickness of the second adhesive layer 240 may be approximately 1 µm to 10µm.

A distance T3 between a first position of the fourth surface 241b and the third surface 241a may be different from a distance T4 between a second position of the fourth surface 241b and the third surface 241a. Similar to the first adhesive layer 230, the distances T3 and T4 may satisfy the following equation: 10 nm ≤ |T3-T4| ≤ 2 µm. T3 represents a third thickness between the third surface 241a and the fourth surface 241b and T4 represents a fourth thickness between the third surface 241a and the fourth surface 241b. As seen in Fig.2, vertical distances T3 and T4 are distances along vectors substantially perpendicular to the surface plane of reflective polarizing film 210.

When the distances T3 and T4 satisfy the following equation: 10 nm ≤ |T3-T4|, light coming from a light source may be diffused because of the curved or uneven surfaces on one surface of the second adhesive layer 240. When the distances T3 and T4 satisfy the following equation: |T3-T4| ≤ 2 µm, a reduction in the luminance resulting from a large height difference of the second adhesive layer 240 may be prevented.

The second diffusion layer 250 may be the same as or similar to the first diffusion layer 220. The second diffusion layer 250 may diffuse the light coming from the external light source through a plurality of second diffusion particles 252 (and/or bubbles) in a second light transmitting material 251.

The second light transmitting material 251 forming the second diffusion layer 250 may include unsaturated polyester, methyl methacrylate, ethyl methacrylate, isobutyl methacrylate, normal butyl methacrylate, normal butyl methyl methacrylate, acrylic acid, methacrylic acid, hydroxyethyl methacrylate, hydroxypropyl methacrylate, hydroxyethyl acrylate, acrylamide, methylol acrylamide, glycidyl methacrylate, ethyl acrylate, isobutyl acrylate, normal butyl acrylate, acrylic-based material such as 2-ethylhexyl acrylate polymer, 2-ethylhexyl acrylate copolymer or 2-ethylhexyl acrylate terpolymer, urethane-based material, epoxy-based material, melamine-based material, polycarbonate, and polystyrene, for example.
Other materials may also be used.

Each of the second diffusion particles 252 in the second diffusion layer 250 may be a bead (such as provided in a cavity). Each of the second diffusion particles 252 may be formed of a material selected from the group consisting of polymethylmethacrylate (PMMA), polystyrene, silicon, and a combination thereof.

Some of the beads may be exposed outside of the first diffusion layer 220 and/or the second diffusion layer 250.

The second diffusion layer 250 may further include or may alternatively include a plurality of bubbles to diffuse the light coming from the external light source. The bubbles may be provided instead of the second diffusion particles 252 or may be provided with the first diffusion particles 252.

The second diffusion layer 250 may include 10 to 50 parts by weight of the second diffusion particles 252 based on the second light transmitting material 251. When the amount of the second diffusion particles 252 based on the second light transmitting material 251 is equal to or greater than 10 parts by weight, a difficulty diffusing the light from the light source using the beads may be prevented (or reduced). When the amount of the second diffusion particles 252 based on the second light transmitting material 251 is equal to or less than 50 parts by weight, a reduction in transmittance of the light from the light source can be prevented.

Diameters of the various second diffusion particles 252 distributed in the second light transmitting material 251 may be different from one another (or non-uniform).

The second diffusion particles 252 may have a circle shape, an oval shape, a snowman shape, and/or an even circle shape. Other shapes may also be used.

The second diffusion particles 252 may be non-uniformly distributed throughout the second light transmitting material 251.

The diameters of the second diffusion particles 252 may be approximately 0.5 µm to 10 µm. When the diameters of the second diffusion particles 252 are small, a light diffusivity of the optical sheet 200 can be improved by increasing a density of the second diffusion particles 252 in the second diffusion layer 250. However, when the diameters of the second diffusion particles 252 are very small, interference of the light from an external light source may occur. Therefore, when diameters of the second diffusion particles 252 are equal to or greater than 0.5 µm, light diffusivity of the optical sheet 200 can be improved to an extent that interference of the light may not occur (or may minimally occur).

When diameters of the second diffusion particles 252 are large, the second diffusion layer 250 may be thickly formed to secure light diffusivity of the optical sheet 200, and thus it may be difficult to manufacture the thin profile optical sheet 200. Therefore, when diameters of the second diffusion particles 252 are equal to or less than 10 µm, the thin profile of the optical sheet 200 can be achieved to the extent that the light diffusivity of the optical sheet 200 is not reduced (or is not substantially reduced).

The second adhesive layer 240 may be used to attach the reflective polarizing film 210 to the second diffusion layer 250 and/or may be the same as the first adhesive layer 230.

The second adhesive layer 240 may be formed of a material selected from the group consisting of an acrylic-based adhesive, a rubber-based adhesive, a silicon-based adhesive, and a combination thereof.

Examples of the acrylic-based adhesive include acrylic acid alkyl ester such as ethyl acrylate, butyl acrylate, amyl acrylate, 2-ethylhexyl acrylate, octyl acrylate, cyclohexyl acrylate and benzyl acrylate, and methacrylic acid alkyl ester such as butyl methacrylate, 2-ethylhexyl methacrylate, cyclohexyl methacrylate and benzyl methacrylate.

The rubber-based adhesive may include a block copolymer including natural rubber, isoprene rubber, styrene-butadiene rubber, reclaimed rubber, polyisobuthylene rubber, styrene-isoprene-styrene rubber, and styrene-butadiene-styrene rubber as a principal component.

Examples of the silicon-based adhesive include dimethylsiloxane-based material and diphenylsiloxane-based material.

A difference between a refractive index of the second light transmitting material 251 and a refractive index of the second adhesive layer 240 may be substantially less than or equal to approximately 0.2.

When the difference between the refractive indexes of the second light transmitting material 251 and the second adhesive layer 240 is equal to or greater than 0, a loss of light from the light source can be prevented and luminance can be improved. When a difference between the refractive indexes of the second light transmitting material 251 and the second adhesive layer 240 is less than or equal to approximately 0.2, light from the light source may be reflected or refracted at an interface between the second adhesive layer 240 and the second diffusion layer 250. Therefore, a reduction in the luminance caused by a light loss at the side may be prevented (and/or reduced).

The optical sheet 200 may prevent loss of the light coming from the light source and improve the luminance by allowing a difference between the refractive indexes of the second light transmitting material 251 and the second adhesive layer 240 to be less than or equal to approximately 0.2.

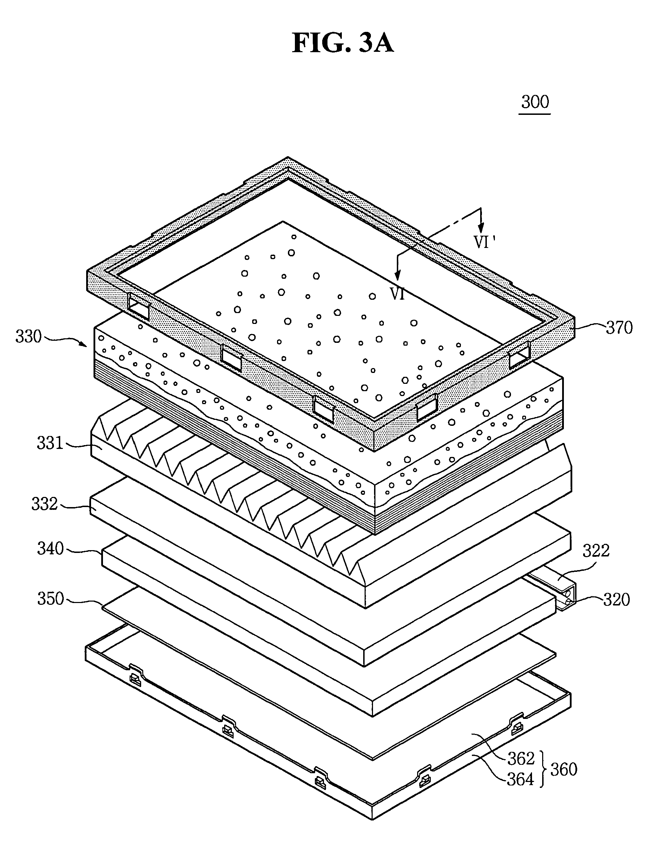

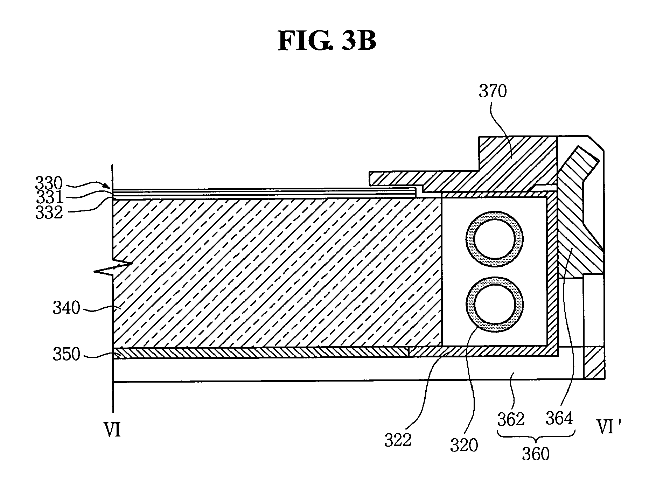

FIGs. 3A and 3B are an exploded perspective view and a cross-sectional view illustrating a configuration of a backlight unit including an optical sheet according to an example embodiment of the invention. Other embodiments and configurations are also within the scope of the present invention.

FIGs. 3A and 3B show an edge type backlight unit. Since configuration of an optical sheet shown in FIGs. 3A and 3B is substantially the same as the optical sheets described above, a further description may be briefly made or may be entirely omitted.

As shown in FIGs. 3A and 3B, a backlight unit 300 may be included in a liquid crystal display and may provide light to a liquid crystal display panel included in the liquid crystal display.

The backlight unit 300 may include a light source 320 and an optical sheet 330. The backlight unit 300 may further include a light guide 340 (or light guide plate), a reflector 350 (or reflective plate), a bottom cover 360, and a mold frame 370.

The light source 320 may produce light using a drive power received from outside the light source and may emit the produced light.

The light source 320 may be positioned at one side of the light guide 340 along a long axis direction of the light guide 340. The light source 320 may also be positioned at both sides of the light guide 340. Light from the light source 320 may be directly incident on the light guide 340. Alternatively, the light from the light source 320 may be reflected from a light source housing 322 surrounding a portion of the light source 320, for example, surrounding about 3/4 of an outer circumferential surface of the light source 320, and then the light may be incident on the light guide 340.

The light source 320 may be one of a cold cathode fluorescent lamp (CCFL), a hot cathode fluorescent lamp (HCFL), an external electrode fluorescent lamp (EEFL), and a light emitting diode (LED). Other light sources may also be used.

The optical sheet 330 may be positioned on the light guide 340. The optical sheet 330 can focus light from the light source 320.

The optical sheet 330 may include a reflective polarizing film, a first adhesive layer on one surface of the reflective polarizing film, and a first diffusion layer on the first adhesive layer. The first diffusion layer may include a first light transmitting material and a plurality of first diffusion particles (and/or beads). A difference between a refractive index of the first adhesive layer and a refractive index of the first light transmitting material may be less than or equal to approximately 0.2.

A light loss of the optical sheet 330 can be prevented and luminance of the optical sheet 330 can be improved. As a result, a display quality of the backlight unit 300 can be improved.

A diffusion sheet 332 and/or a prism sheet 331 may be positioned between the light guide 340 and the optical sheet 330.

The light guide 340 may face the light source 320. The light guide 340 may guide the light so as to emit light from the light source 320 in an upward manner.

The reflector 350 may be positioned under the light guide 340. The reflector 350 may reflect the light from the light source 320 in an upward manner and then the light may be emitted downward via the light guide 340.

The bottom cover 360 may include a bottom portion 362 and a side portion 364 extending from the bottom portion 362 to form a recipient space. The recipient space may receive the light source 320, the optical sheet 330, the light guide 340, and the reflector 350.

The mold frame 370 may be approximately a rectangular-shaped frame. The mold frame 370 may be fastened to the bottom cover 360 from an upper side of the bottom cover 360 in a top-down manner.

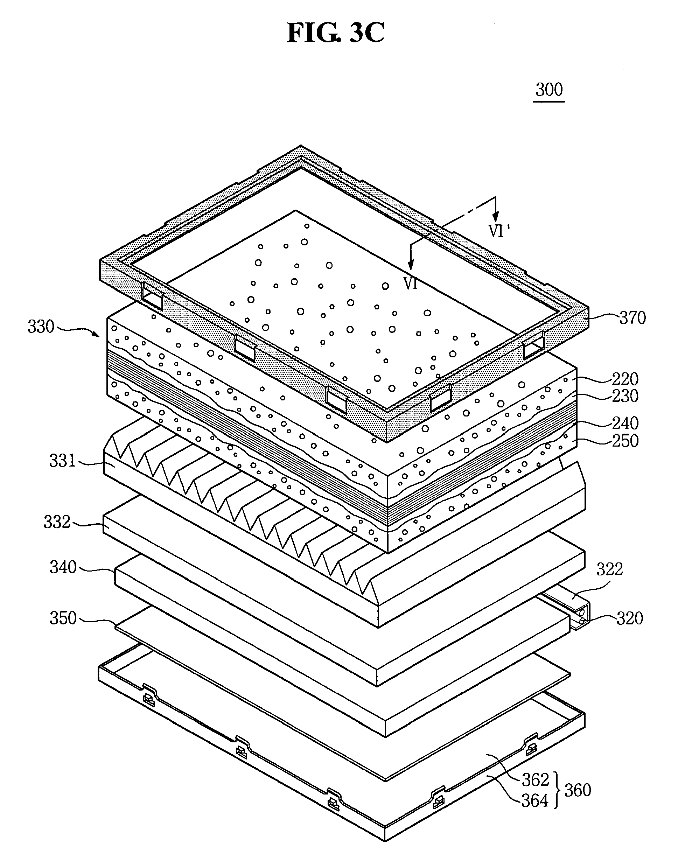

FIG. 3C shows a backlight unit according to an example embodiment of the present invention. Other embodiments and configurations are also within the scope of the present invention.

As shown in FIG. 3C, the backlight unit 300 may be substantially the same as the backlight unit 300 shown in FIGs. 3A and 3B except that the optical sheet 330 further includes the second diffusion layer 250 and the second adhesive layer 240 in addition to the first diffusion layer 220 and the first adhesive layer 230. Therefore, a further description of the backlight unit 300 is omitted for ease of description.

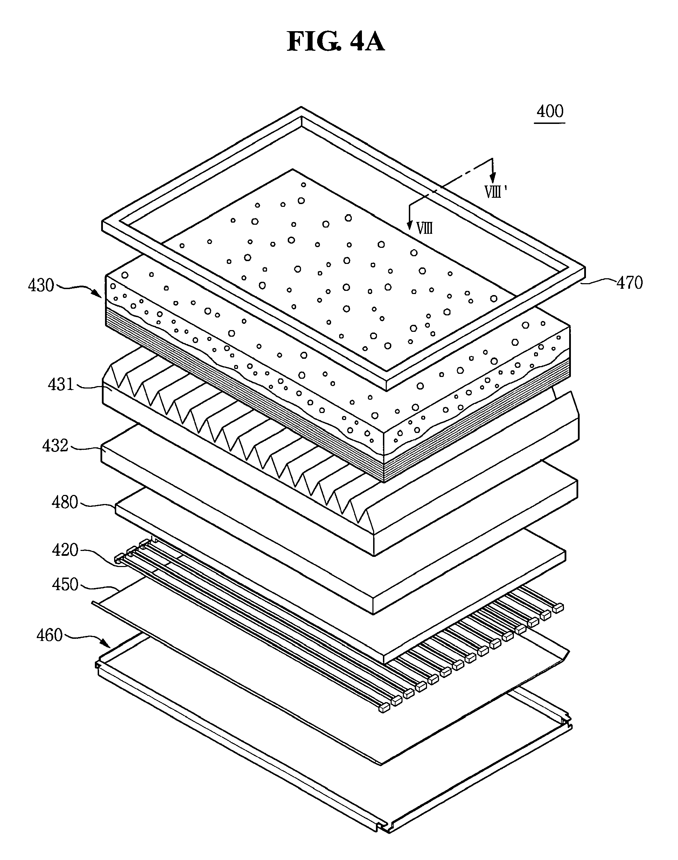

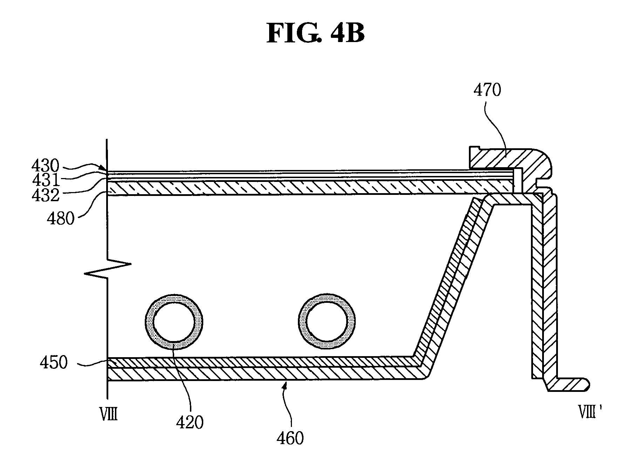

FIGs. 4A and 4B are an exploded perspective view and a cross-sectional view illustrating a configuration of a backlight unit according to an example embodiment of the present invention. Other embodiments and configurations are also within the scope of the present invention.

FIGs. 4A and 4B show a direct type backlight unit. Since a backlight unit 400 shown in FIGS. 4A and 4B may be substantially the same as the backlight unit 300 shown in FIGs. 3A and 3B (except a location of a light source and changes in components depending on location of the light source), a further description may be briefly made or may be entirely omitted.

As shown in FIGs. 4A and 4B, the backlight unit 400 may be included in a liquid crystal display and may provide light to a liquid crystal display panel included in the liquid crystal display.

The backlight unit 400 may include a light source 420 and an optical sheet 430. The backlight unit 400 may further include a reflector 450, a bottom cover 460, a mold frame 470, and a diffusion plate 480.

The light source 420 may be positioned under the diffusion plate 480.
Therefore, light from the light source 420 can be directly incident on the diffusion plate 480.

The optical sheet 430 may be positioned on the diffusion plate 480. The optical sheet 430 may focus the light coming from the light source 420.

The optical sheet 430 may include a reflective polarizing film, a first adhesive layer on one surface of the reflective polarizing film, and a first diffusion layer on the first adhesive layer. The first diffusion layer may include a first light transmitting material and a plurality of first diffusion particles (and/or beads). A difference between a refractive index of the first adhesive layer and a refractive index of the first light transmitting material may be less than or equal to approximately 0.2. The optical sheet 430 may correspond to one of the optical sheets discussed above.

A light loss of the optical sheet 430 can be prevented and luminance of the optical sheet 430 can be improved. As a result, a display quality of the backlight unit 400 can be improved.

A diffusion sheet 432 and/or a prism sheet 431 may be positioned between the diffusion plate 480 and the optical sheet 430.

The diffusion plate 480 may be positioned between the light source 420 and the optical sheet 430 and can diffuse the light from the light source 420 in an upward manner. The light source 420 may not be seen from a top of the backlight unit 400 because of the diffusion plate 480 on the light source 420, and the diffusion plate 480 can further diffuse the light from the light source 420.

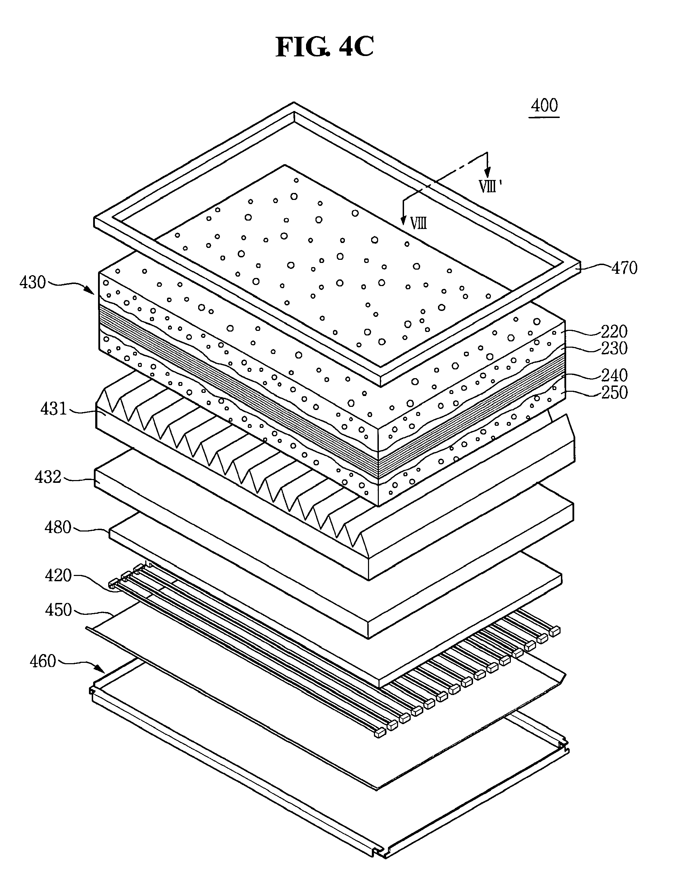

FIG. 4C shows a backlight unit according to an example embodiment of the present invention. Other embodiments and configurations are also within the scope of the present invention.

As shown in FIG. 4C, the backlight unit 400 may be substantially the same as the backlight unit 400 shown in FIGs. 4A and 4B except that the optical sheet 430 further includes the second diffusion layer 250 and the second adhesive layer 240 in addition to the first diffusion layer 220 and the first adhesive layer 230. Therefore, a further description of the backlight unit 400 is omitted.

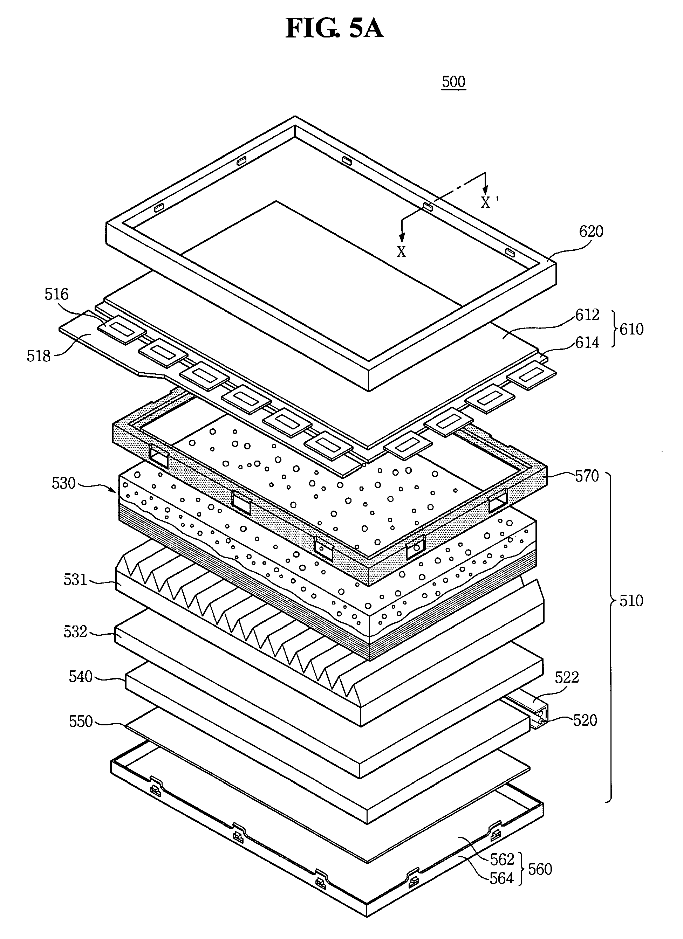

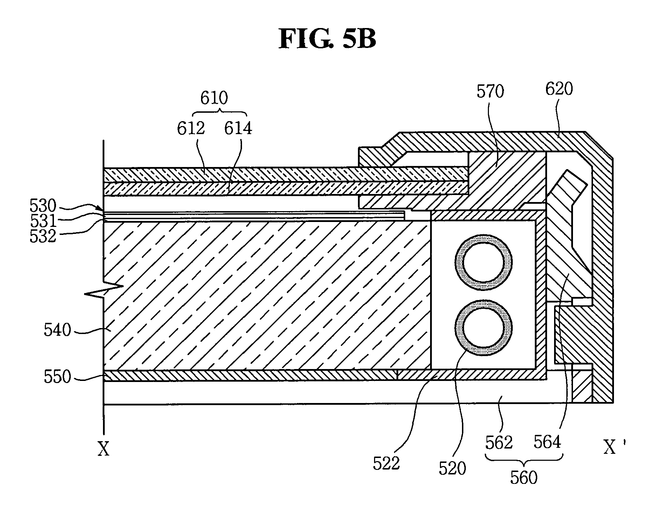

FIGs. 5A and 5B are an exploded perspective view and a cross-sectional view illustrating a configuration of a liquid crystal display according to an example embodiment of the present invention. Other embodiments and configurations are also within the scope of the present invention.

A liquid crystal display 500 shown in FIGs. 5A and 5B may include the backlight unit shown in FIGs. 3A and 3B. For example, the liquid crystal display 500 may include a backlight unit 510 similar to the backlight unit shown in FIGs. 4A and 4B. Since the backlight unit 510 shown in FIGs. 5A and 5B is described above with reference to FIGs. 3A and 3B, a further description thereof may be briefly made or may be entirely omitted.

As shown in FIGs. 5A and 5B, the liquid crystal display 500 can display an image using electro-optical characteristics of liquid crystals.

The liquid crystal display 500 may include the backlight unit 510 and a liquid crystal display panel 610. The backlight unit 510 may be positioned under the liquid crystal display panel 610 and may provide light to the liquid crystal display panel 610.

The backlight unit 510 may include a light source 520 and an optical sheet 530. Light from the light source 520 may be reflected from a light source housing 522. The backlight unit 510 may further include a light guide 540, a reflector 550 (or reflective plate), a bottom cover 560, and a mold frame 570.

A diffusion sheet 532 and/or a prism sheet 531 may be positioned between the light guide 540 and the optical sheet 530.

The bottom cover 560 may include a bottom portion 562 and a side portion 564 extending from the bottom portion 562 to form a recipient space.

The liquid crystal display panel 610 may be positioned on the mold frame 570. The liquid crystal display panel 610 may be fixed by a top cover 620 that is fastened to the bottom cover 560 in a top-down manner.

The liquid crystal display panel 610 may display an image using light provided by the light source 520 of the backlight unit 510.

The liquid crystal display panel 610 may include a color filter substrate 612 and a thin film transistor substrate 614 that are opposite to each other with liquid crystals interposed between the color filter substrate 612 and the thin film transistor substrate 614.

The color filter substrate 612 may achieve colors of an image displayed on the liquid crystal display panel 610.

The color filter substrate 612 may include a color filter array of a thin film form on a substrate made of a transparent material such as glass or plastic. For example, the color filter substrate 612 may include red, green, and blue color filters. An upper polarizing plate may be positioned on the color filter substrate 612.

The thin film transistor substrate 614 may be electrically connected to a printed circuit board 518, on which a plurality of circuit parts are mounted, through a drive film 516. The thin film transistor substrate 614 may apply a drive voltage provided by the printed circuit board 518 to liquid crystals in response to a drive signal provided by the printed circuit board 518.

The thin film transistor substrate 614 may include a thin film transistor and a pixel electrode on another substrate made of a transparent material such as glass or plastic. A lower polarizing plate may be positioned under the thin film transistor substrate 614.

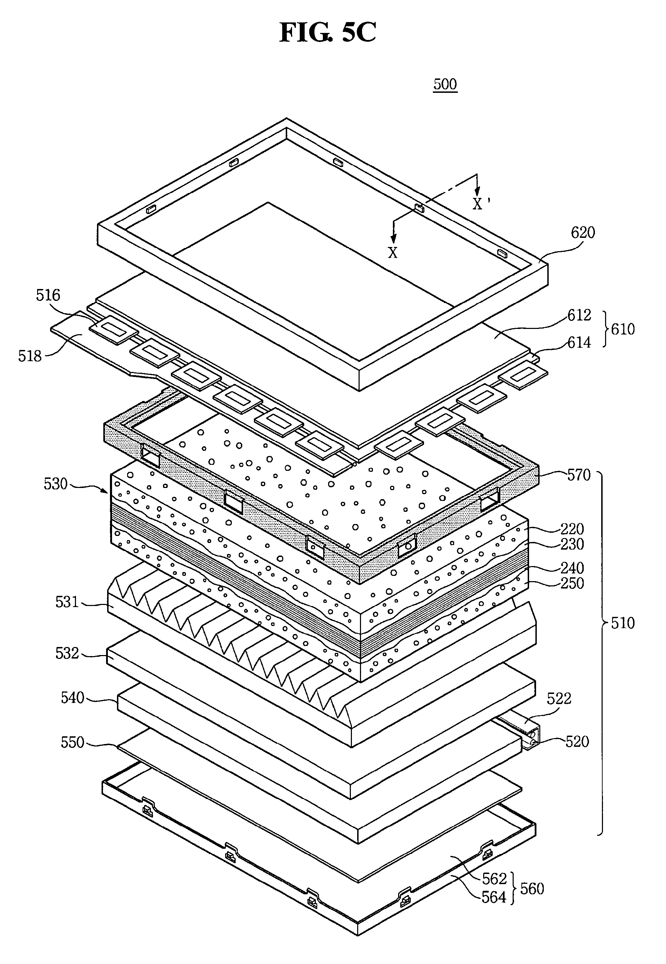

FIG. 5C shows a liquid crystal display according to an example embodiment of the present invention. Other embodiments and configurations are also within the scope of the present invention.

As shown in FIG. 5C, the liquid crystal display 500 may be substantially the same as the liquid crystal display 500 shown in FIGs. 5A and 5B except that the optical sheet 530 further includes the second diffusion layer 250 and the second adhesive layer 240 in addition to the first diffusion layer 220 and the first adhesive layer 230. Therefore, a further description of the liquid crystal display 500 is omitted.

An optical sheet, an backlight unit including the optical sheet, and a liquid crystal display including the backlight unit according to the example embodiments can diffuse light from the light source and improve luminance uniformity by including a plurality of first diffusion particles (or beads) in the first diffusion layer.

The optical sheet, the backlight unit including the optical sheet, and the liquid crystal display including the backlight unit according to the example embodiments can further improve luminance uniformity by further including a second diffusion layer under the reflective polarizing film.

The optical sheet, the backlight unit including the optical sheet, and the liquid crystal display including the backlight unit according to the example embodiments can prevent a loss of the light of the optical sheet and improve luminance by adjusting the refractive index of the light transmitting material forming the diffusion layer and the refractive index of the adhesive layer.

The optical sheet, the backlight unit including the optical sheet, and the liquid crystal display including the backlight unit according to the example embodiments can diffuse light and improve the luminance uniformity by forming the adhesive layer having a curved, uneven or non-uniform surface between the reflective polarizing film and the diffusion layer.

An example embodiment of the present invention may provide an optical sheet, a backlight unit including the optical sheet, and a liquid crystal display including the backlight unit capable of improving diffusion efficiency of light.

An optical sheet may include a reflective polarizing film, a first adhesive layer on one surface of the reflective polarizing film, and a first diffusion layer (or unit) on the first adhesive layer. The first diffusion layer may include a first light transmitting material and a plurality of first diffusion particles. A difference between a refractive index of the first adhesive layer and a refractive index of the first light transmitting material may be less than or equal to approximately 0.2.

A backlight unit may include a light source, and an optical sheet on the light source. The optical sheet may include a reflective polarizing film, a first adhesive layer on one surface of the reflective polarizing film, and a first diffusion layer (or unit) on the first adhesive layer. The first diffusion layer may include a first light transmitting material and a plurality of first diffusion particles. A difference between a refractive index of the first adhesive layer and a refractive index of the first light transmitting material may be less than or equal to approximately 0.2. The first adhesive layer may have a first thickness and a second thickness, and the first thickness T1 and the second thickness T2 substantially satisfy the following equation: 10 nm ≤ |T1-T2| ≤2 µm.

A liquid crystal display may include a light source, an optical sheet on the light source, and a liquid crystal panel on the optical sheet. The optical sheet may include a reflective polarizing film, a first adhesive layer on one surface of the reflective polarizing film, and a first diffusion layer (or unit) on the first adhesive layer. The first diffusion layer may include a first light transmitting material and a plurality of first diffusion particles. A difference between a refractive index of the first adhesive layer and a refractive index of the first light transmitting material may be less than or equal to approximately 0.2. The first adhesive layer may have a first thickness and a second thickness, and the first thickness T1 and the second thickness T2 substantially satisfy the following equation: 10 nm ≤ |T1-T2| ≤ 2 µm.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An optical sheet comprising:
a reflective polarizing film;
a first adhesive layer on one surface of the reflective polarizing film; and
a first diffusion layer on the first adhesive layer, the first diffusion layer including a first light transmitting material and a plurality of first diffusion particles,
wherein a difference between a refractive index of the first adhesive layer and a refractive index of the first light transmitting material is less than or equal to approximately 0.2,
wherein the first adhesive layer includes a first surface and a second surface
wherein T1 represents a first thickness between the first surface and the second surface, T2 represents a second thickness between the first surface and the second surface, and T1 and T2 substantially satisfy the following equation: 10 nm ≤ |T1-T2| ≤ 2 µm.

2. The optical sheet of claim 1, further comprising:
a second diffusion layer on another surface of the reflective polarizing film.

3. The optical sheet of claim 2, further comprising:
a second adhesive layer between the reflective polarizing film and the second diffusion layer, the second adhesive layer including a third surface and a fourth surface,
wherein T3 represents a third thickness between the third surface and the fourth surface, T4 represents a fourth thickness between the third surface and the fourth surface, and wherein T3 and T4 substantially satisfy the following equation: 10 nm ≤ |T3-T4| ≤ 2 µm.

4. The optical sheet of claim 3, wherein an average thickness of the second adhesive layer is approximately 1 µm to 10 µm.

5. The optical sheet of claim 2, wherein the first adhesive layer or the second adhesive layer is formed of a material selected from the group consisting of an acrylic-based adhesive, a rubber-based adhesive, a silicon-based adhesive, and a combination thereof.

6. The optical sheet of claim 2, wherein the second diffusion layer includes a second light transmitting material and a plurality of second diffusion particles.

7. The optical sheet of claim 6, wherein a diameter of one of the second diffusion particles is approximately 0.5 µm to 10 µm.

8. The optical sheet of claim 6, wherein each of the diffusion particles is a bead.

9. The optical sheet of claim 6, wherein each of the first diffusion particles or the second diffusion particles is formed of a material selected from the group consisting one of polymethylmethacrylate (PMMA), polystyrene, silicon, and a combination thereof.

10. The optical sheet of claim 1, wherein an average thickness of the first adhesive layer is approximately 1 µm to 10 µm.

11. The optical sheet of claim 1, wherein a diameter of one of the first diffusion particles is approximately 0.5 µm to 10 µm.

12. The optical sheet of claim 1, wherein the first diffusion layer further includes a plurality of bubbles.

13. The optical sheet of claim 1, wherein a thickness of the reflective polarizing film is approximately 100 µm to 300 µm.

14. The optical sheet of claim 1, wherein the reflective polarizing film includes a first layer and a second layer, and wherein a refractive index of the first layer is different from a refractive index of the second layer.

15. A liquid crystal display comprising:
a light source;
an optical sheet to receive light from the light source, the optical sheet including:
a reflective polarizing film,
a first adhesive layer on one surface of the reflective polarizing film, and
a first diffusion layer on the first adhesive layer, the first diffusion layer including a first light transmitting material and a plurality of first diffusion particles, and
a liquid crystal panel on the optical sheet,
wherein a difference between a refractive index of the first adhesive layer and a refractive index of the first light transmitting material is less than or equal to approximately 0.2,
wherein the first adhesive layer includes a first surface and a second surface wherein T1 represents a first thickness between the first surface and the second surface, T2 represents a second thickness between the first surface and the second surface, and T1 and T2 substantially satisfy the following equation: 10 nm ≤ |T1-T2| ≤ 2 µm.
